# EUROPEAN PATENT APPLICATION

(11) **EP 1 800 914 A1**
(43) Date of publication of application: **27.06.2007**
(21) Application number: 06256559.3
(22) Date of filing: 22.12.2006
(51) Int. Cl.: B60G 15/06

(54) **Strut mount**

(30) Priority: 26.12.2005 JP 2005371843; 19.07.2006 JP 2006196475
(71) Applicant: Bridgestone Corporation, Tokyo 104-8340 (JP)
(72) Inventor: Hattori, Yuzo c/o Bridgestone Corporation, Yokohama-shi, Kanagawa 244-8510 (JP)
(74) Representative: Whalley, Kevin

(57) **Abstract**

A strut mount (10) disposed between a body panel (36) and a strut rod (32) comprises an outer member (12) connected to the body panel (36), an inner member (14) connected to the strut rod (32), an elastically deformable elastomer (16) disposed so as to connect the outer member (12) and the inner member (14), and a spring bearing portion (12A) formed by extending a part of the outer member (12) outward in a flange form so as to support an end portion of a spring (34) disposed along with the strut rod (32).

## Description

### BACKGROUND OF THE INVENTION

### 1. Field of the Invention

The present invention relates to a strut mount absorbing vibrations from a strut rod and capable of applying to a suspension of a vehicle such as a member mount, a body mount or the like.

### 2. Description of Related Art

It has been known that a suspension device is disposed between a wheel and a vehicle body in vehicles such as an automobile and the like, and a strut mount is disposed at an end portion of a strut rod of a buffer in the suspension device. As the strut mount supporting the vehicle body, there is a construction of the conventional technique shown in FIG. 5A as disclosed in JP-U-H01-134502, JP-U-H02-253026 and JP-A-2005-299737. The conventional technique will be explained with reference to this FIGure below.

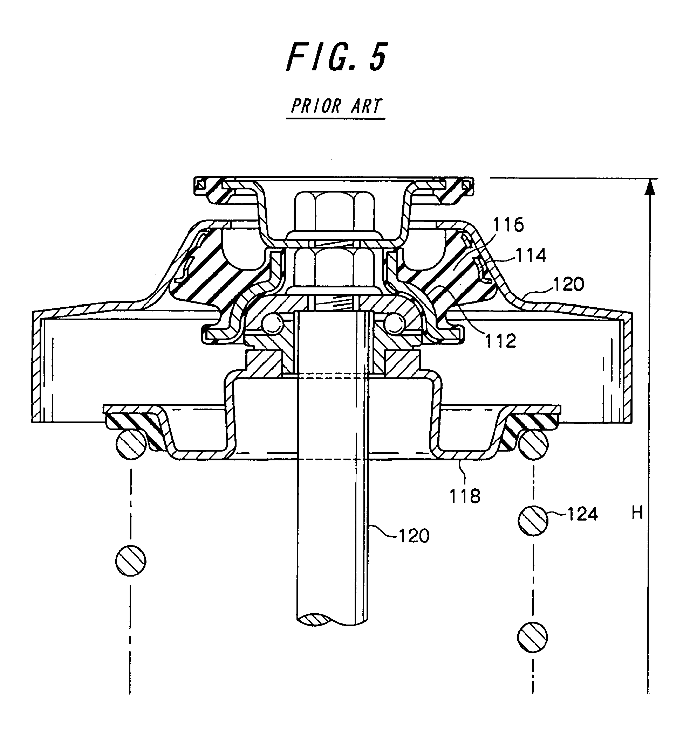

The strut mount shown in FIG. 5 has a structure that an elastomer 116 made of a rubber body is disposed between an inner member 112 and an outer member 114 located at the outer peripheral side of the inner member 112. In addition, the outer member 114 is attached to a body panel 120 constituting a part of the vehicle body. Furthermore, a bracket 118 attached to a lower part of the inner member 112 supports an upper end portion of a coil spring 124 arranged so as to helically wind around a strut rod 122.

In the above-mentioned conventional construction, however, the upper end portion of the coil spring 124 is supported by the bracket 118, so that if it is intended to make the length of the coil spring 124 long for improving the ride quality of the vehicle, it is required to increase a height H as a distance between up and down ends of the suspension device including the strut mount, but since there is a restriction in the height H, the length of the coil spring 124 cannot be made longer, and hence the conventional construction has a drawback of sacrificing the ride quality.

### SUMMARY OF THE INVENTION

In view of the above-mentioned fact, it is an object of the present invention to provide a strut mount capable of improving the ride quality without increasing the height of the suspension device.

The strut mount according to the present invention is a strut mount disposed between a body panel and a strut rod, which comprises an outer member connected to the body panel, an inner member connected to the strut rod and located inside the outer member, an elastically deformable elastomer disposed so as to connect the outer member and the inner member, and a spring bearing portion formed by extending a part of the outer member outward in a flange form so as to support an end portion of a spring disposed along with the strut rod.

The function of the strut mount according to the present invention will be explained below.

In the present invention, the inner member is located inside the outer member connected to the body panel and is connected to the strut rod. In addition, the elastically deformable elastomer is disposed so as to connect these outer and inner members. Also, the spring bearing portion formed by extending a part of the outer member outward in a flange form supports the end portion of the spring disposed along with the strut rod.

Therefore, if vibrations with, for example, a large amplitude and a low frequency are transmitted from the wheel side, they are transferred to the inner member through the strut rod to deform the elastomer. As a result, the vibrations are absorbed and attenuated by resistance based on the inner friction of the elastomer, so that the vibrations are hardly transmitted to the body panel connected to the outer member. On the other hand, if vibrations with, for example, a small amplitude and a high frequency are transmitted from the wheel side, they are transferred through the spring to the spring receiving portion of the outer member supporting the end portion of the spring.

In the present invention, the end portion of the spring is not supported by a bracket attached to the inner member, so that the height of the suspension device becomes not large. As a result, in order to improve the ride quality of the vehicle, the length of the spring can be made longer. On the other hand, the height of the suspension device can be retracted to lower a food height of the vehicle, whereby there can be increased the freedom degree of vehicle design.

On the other hand, although the present invention is the strut mount of a type having no direct fixation to the side of the vehicle body, it has a structure that the input of vibrations is divided into the elastomer and the spring receiving portion. Therefore, it is easy to adjust the elastic strength of the elastomer constituting the strut mount, and hence it is easy to improve the ride quality of the vehicle. As mentioned above, according to the strut mount disposed between the body panel and the strut rod, the ride quality of the vehicle can be improved without increasing the height of the suspension device.

In a preferable embodiment of the present invention, an elastic receiving portion is disposed at a position of the spring receiving portion opposing to the end portion of the spring.

In this embodiment, the elastic receiving portion is disposed at the position of the spring receiving portion opposing to the end portion of the spring by covering the elastic receiving portion with, for example, an elastically deformable rubber material, whereby there can be reduced sound vibrations in the operation of the spring. On the other hand, the elastic strength of the elastomer supporting the strut rod and the elastic strength of the elastic receiving portion in the spring receiving portion supporting the spring can be adjusted independently.

In another preferable embodiment of the present invention, the elastomer and the elastic receiving portion are integrally formed with the same rubber material.

In this embodiment, the elastic receiving portion is integrally formed with the elastomer with the same rubber material as a form extending from the elastomer, whereby the spring receiving portion can be covered with the elastic receiving portion connected to the elastomer at the elastically deformable state and the sound vibrations can be reduced in the operation of the spring without increasing the production cost.

In the other preferable embodiment of the present invention, the elastomer and the elastic receiving portion are independently formed with separate rubber materials.

In this embodiment, the elastic receiving portion is disposed at the position of the spring receiving portion opposing to the end portion of the spring by covering the elastic receiving portion with, for example, an elastically deformable rubber material, whereby there can be reduced sound vibrations in the operation of the spring. Also, since the members made of general rubber can be employed as an elastic member, the increase of the production cost is not caused when the material is changed accompanied with the change of the construction of the strut mount.

On the other hand, the elastomer and the elastic receiving portion are separately constructed, so that it is not required to integrally adhere them to the outer member through vulcanization. As a result, the outer member is not forcedly required to have a complex shape for integrally adhering the elastomer and the elastic receiving portion through vulcanization, and hence it is made possible to reduce the production cost of the strut mount.

In a still further preferable embodiment of the present invention, a locking part for positioning the end portion of the spring is provided at a part of the outer member adjacent to the spring receiving portion. In this case, the position of the end portion of the spring is stabilized by the locking part, so that the displacement of the end portion of the spring will not be caused even if vibrations with a large amplitude are input.

In a further preferable embodiment of the present invention, a bearing is disposed at a part of the spring receiving portion opposite to the end portion of the spring to make the end portion of the spring into contact with the spring receiving portion through the bearing.

In this case, the bearing is disposed between the end portion of the spring and the spring receiving portion, so that even if a force for rotating the spring is applied, the relative rotation between the end portion of the spring and the spring receiving portion is caused through the bearing so as not to apply extra force to the spring and the strut mount.

As explained above, according to the present invention, there can be provided a strut mount capable of improving the ride quality of the vehicle without increasing the height of the suspension device.

### BRIEF DESCRIPTION OF THE DRAWINGS

The present invention will be described with reference to the accompanying drawings, wherein:
FIG. 1 is a sectional view of the strut mount according to the first embodiment of the present invention at a state of mounting in a vehicle;
FIG. 2 is a sectional view of the strut mount according to the second embodiment of the present invention at a state of mounting in a vehicle;
FIG. 3 is a sectional view of the strut mount according to the third embodiment of the present invention at a state of mounting in a vehicle;
FIG. 4 is a sectional view of the strut mount according to the forth embodiment of the present invention at a state of mounting in a vehicle; and
FIG. 5 is a sectional view of the conventional strut mount.

### DESCRIPTION OF THE PREFERRED EMBODIMENTS

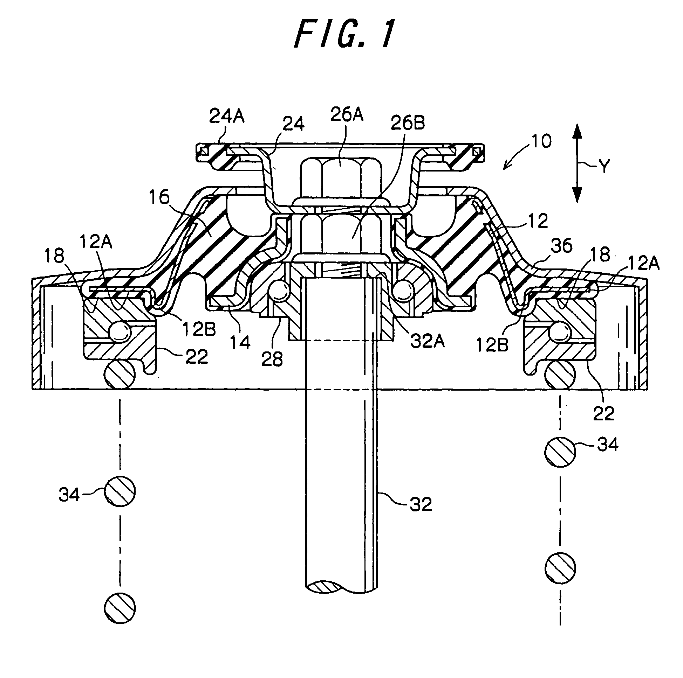

In FIG. 1 is shown a strut mount according to the first embodiment of the present invention. A central portion of a strut mount 10 according to the embodiment of FIG. 1 is connected to an end portion of a strut rod 32 of a buffer in a suspension device for a vehicle. An outer peripheral side of an outer member 12 constituting an outer frame of the strut mount 10 is fitted to a body panel 36 as a part of a vehicle body.

That is, the outer member 12 made of a metal material and having a tapered form and a through-hole formed at the center portion thereof is fitted to the inner peripheral side of the body panel 36, whereby the outer member 12 is connected to the body panel 36 to dispose the strut mount 10 between the strut rod 32 and the body panel 36.

Furthermore, at the outer peripheral side of the outer member 12 is arranged a spring receiving portion 12A formed by extending outward in a flange form. At the outer peripheral side of the strut rod 32 is disposed a coil spring 34 along with the strut rod 32, and an end portion of the coil spring is supported by the spring receiving portion 12A.

In this regard, a portion of the outer member 12 adjacent to the spring receiving portion 12A forms a projecting portion 12B as a locking part for positioning an upper end portion of the coils spring so as to surround the central portion of the outer member 12 over a full circle. At the position of the spring receiving portion 12A opposing to the end portion of the coil spring 34 is disposed an elastic receiving portion 18 made of a rubber material and also a bearing 22 is disposed at this portion, whereby the end portion of the coil spring 34 is made into contact with the spring receiving portion 12A through the bearing 22. In this embodiment, therefore, the projecting portion 12B of the outer member 12 guides the end portion of the coil spring 34 through the bearing 22.

On the other hand, an inner member 14 of a cylindrical form having a hole at a center portion thereof is disposed in the central portion of the strut mount 10 located inside the outer member 12. Between the outer member 12 and the inner member 14 is arranged an elastically deformable elastomer 16 made of a rubber material in which an outer peripheral side is adhered through vulcanization to the outer member 12 and an inner peripheral side is adhered through vulcanization to the inner member 14. In the illustrated embodiment, therefore, the ring-shaped elastomer 16 is disposed so as to connect the outer member 12 and the inner member 14 located at the inner side of the outer member 12.

In this case, the rubber material constituting the elastomer 16 is wrapped around the outer peripheral side of the outer member 12 and the inner peripheral side of the inner member 14. The elastic receiving portion 18 is positioned at the outer peripheral side of the elastomer 16 and formed by a portion extending from the elastomer 16, which is integrally formed with the same rubber material as in the elastomer 16.

At the upper portion of the strut mount 10 according to the first embodiment is disposed a cylindrically formed stopper clasp 24 made of a metal, to which is fastened an end portion of the strut rod 32 passing through the inner member 14 with a nut 26A. A stopper rubber 24A is disposed on a portion of the stopper clasp 24 at least opposing to the body panel 36 at the outer peripheral side thereof over a full circle.

Also, the lower portion side of the inner member 14 is enlarged outward and an upper side of a bearing 28 is disposed so as to make into contact with the enlarged portion. A shoulder 32A of the strut rod 32 is engaged into a thinner portion of the bearing 28. As a result, the bearing 28 is fastened to the strut rod 32 at a pinched state between a nut 26B threaded at the lower side of the stopper clasp 24 fastened by the nut 26A and the shoulder 32A, and hence the inner member 14 overlain on the bearing 28 is connected to the end portion of the strut rod 32.

Moreover, the main direction of vibrations in the strut mount 10 of the first embodiment for the purpose of essentially reducing the vibrations is an axial direction of the strut mount 10 along an arrow Y showing up-and-down directions in FIG. 1.

Next, the action of the strut mount 10 will be explained.

In the first embodiment, the inner member 14 is positioned at the inner side of the outer member 12 of the tapered form connected to the body panel 36, and connected to the strut rod 32 through the bearing 28. In addition, the elastically deformable ring-shaped elastomer 16 is arranged so as to connect the outer member 12 and the inner member 14.

Also, the spring receiving portion 12A formed by extending a part of the outer member 12 outward in a flange form supports the end portion of the coil spring 34 disposed in parallel to the strut rod 32. In this case, the elastic receiving portion 18 made of the same rubber as in the elastomer 16 and integrally formed with the elastomer 16 is disposed at the position of the spring receiving portion 12A opposing to the end portion of the coil spring 34. Furthermore, the end portion of the coil spring 34 is supported by the elastic receiving portion 18 through the bearing 22.

Therefore, when vibrations with a large amplitude and a low frequency are transmitted from the wheel side, the vibrations are transferred to the inner member 14 through the strut rod 32 to deform the elastomer 16. As a result, the vibrations are absorbed by the resistance based on the inner friction of the elastomer 16 to attenuate the vibrations, whereby the vibrations are hardly transmitted to the body panel 36 connected to the outer member 12.

On the other hand, when vibrations with a small amplitude and a high frequency are transmitted from the wheel side, the vibrations are transferred to the spring receiving portion 12A of the outer member 12 supporting the end portion of the coil spring 34 through the coil spring 34. Even in this case, the vibrations are absorbed by the elastic receiving portion 18 disposed at the spring receiving portion 12A, so that the vibrations are hardly transmitted to the body panel 36.

In the first embodiment, therefore, since the end portion of the coil spring 34 is not supported by the bracket attached to the inner member 14, the height of the suspension device becomes not large. As a result, in order to improve the ride quality of the vehicle, the length of the spring can be made longer. On the other hand, the height of the suspension device can be retracted to lower a food height of the vehicle, whereby there can be increased the freedom degree of vehicle design.

On the other hand, although the first embodiment is the strut mount 10 of a type having no direct fixation to the side of the vehicle body, it has a structure that the input of vibrations is divided into the elastomer 16 and the spring receiving portion 12A. Therefore, it is easy to adjust the elastic strength of the elastomer 16 constituting the strut mount 10, but also the adjustments of the elastic strength of the elastomer 16 supporting the strut rod 32 and the elastic strength of the elastic receiving portion 18 in the spring receiving portion 12A supporting the coil spring 34 can be independently conducted, and hence the ride quality of the vehicle can be easily improved.

According to the strut mount 10 disposed between the body panel 36 and the strut rod 32, the ride quality of the vehicle can be improved without increasing the height of the suspension device.

In the first embodiment, the elastic receiving portion 18 is integrally formed as a form of extending from the elastomer 16 with the same rubber material as in the elastomer 16. As a result, the spring receiving portion 12A is covered with the electrically deformable rubber material to dispose the elastic receiving portion integrally united with the elastomer 16 at the position of the spring receiving portion 12A opposing to the end portion of the coil spring 34. As a result, the sound vibration in the operation of the coil spring 34 can be reduced without increasing the production cost.

Furthermore, as the portion of the outer member 12 adjacent to the spring receiving portion 12A has the projecting portion 12B as a locking part for positioning the end portion of the coil spring 34, the position of the end portion of the coil spring 34 is stabilized, so that the displacement of the end portion of the coil spring 34 is not caused even if vibrations with a large amplitude are input.

On the other hand, the bearing 22 is disposed in the part of the spring receiving portion 12A opposing to the end portion of the coil spring 34, and the end portion of the coil spring 34 is made into contact with the spring receiving portion 12A through the bearing 22.

Even if a rotating force is applied to the coil spring 34, the end portion of the coil spring 34 and the spring receiving portion 12A are relatively rotated by the bearing 22 so as not to apply extra force to the coil spring 34 and the strut mount 10.

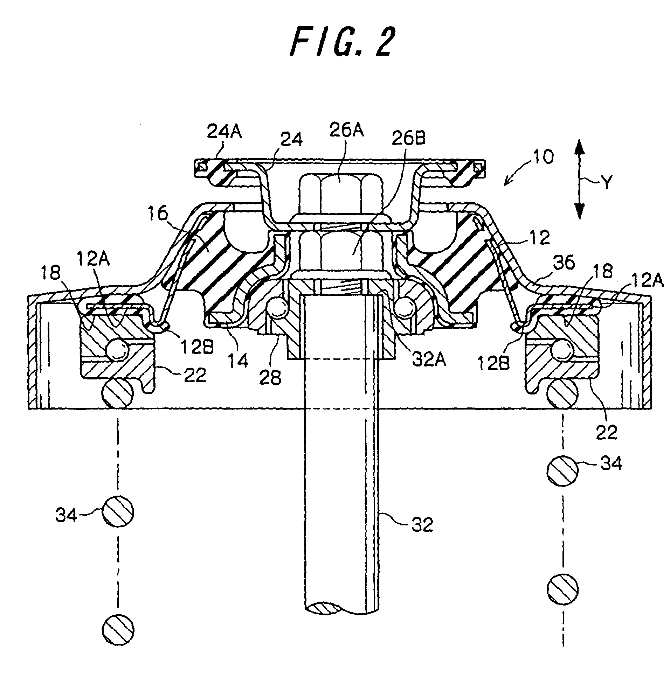

Next, FIG. 2 shows a strut mount according to the second embodiment of the present invention. Moreover, the same member as illustrated in the first embodiment is denoted by the same numeral, and the redundant explanation will be omitted.

The strut mount 10 of the second embodiment has the same structure as in the first embodiment, but the elastomer 16 and the elastic receiving portion 18 are mutually made of different rubber materials as shown in FIG. 2.

In the second embodiment, the spring receiving portion 12A is covered with the elastic receiving portion 18 made of the elastically deformable rubber material to dispose the elastic receiving portion 18 at the position of the spring receiving portion 12A opposing to the end portion of the coil spring 34, whereby the sound vibration in the operation of the coil spring 34 can be reduced. Also, since members made of general rubbers can be employed as elastic materials, the production cost is never increased even when the material is changed accompanied with the change of the construction in the strut mount 10.

On the other hand, since the elastomer 16 and the elastic receiving portion 18 are separately formed, it is not required to integrally adhere them through vulcanization. As a result, the outer member 12 is not forcedly required to have a complex shape for integrally adhering the elastomer 16 and the elastic receiving portion 18 through vulcanization, and hence it is made possible to reduce the production cost of the strut mount 10.

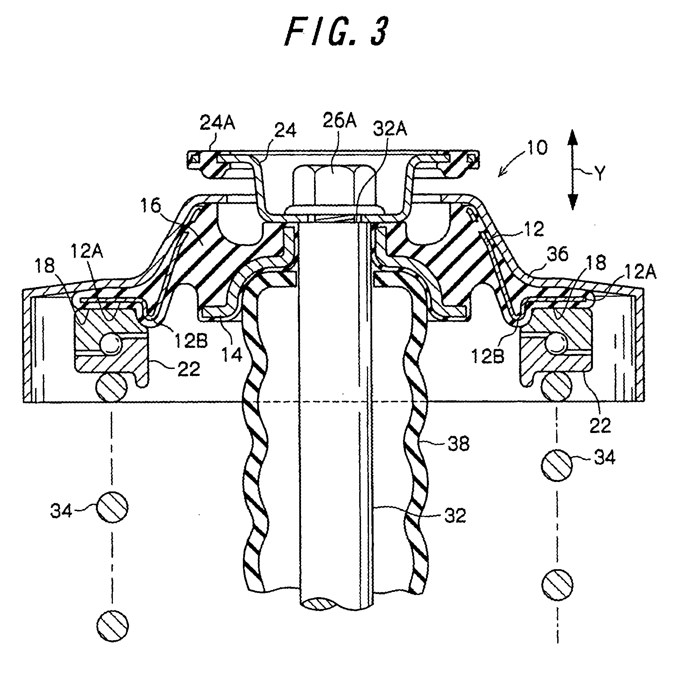

Next, FIG. 3 shows a strut mount according to the third embodiment of the present invention in which the same member as illustrated in the first embodiment is denoted by the same numeral, and the redundant explanation will be omitted.

The strut mount 10 of the third embodiment has substantially the same structure as in the first embodiment.

In the third embodiment, as shown in FIG. 3, the strut rod 32 extends to the lower end face of the stopper clasp 24 without a nut 26B threaded at the lower side of the stopper clasp 24 and a bearing 28 pinched between the nut 26B and a shoulder 32A of the strut rod 32. In addition, a bump rubber 38 made of urethane or the like is disposed at the outer peripheral side of the strut rod 32 in the form of covering the whole of the outer peripheral surface of the strut rod 32 from the lower end face of the stopper clasp 24.

Therefore, the third embodiment develops the actions similar to those of the first embodiment. Further, when the strut mount 10 of the third embodiment is used as a suspension of the front side, it works as follows.

Since the strut rod 32 itself can be rotated with respect to a shock absorber, there is no occurrence of abnormal sound in the steering without attaching the bearing 28. Although the coil spring 34 is rotated in the steering, when only the bearing 22 is disposed between the spring receiving portion 12A and the coil spring 34 as in the strut mount 10 of this embodiment, sound vibrations such as abnormal sound generated by the rotation of the coil spring 34 in the steering and the like can be surely reduced only by the bearing 22.

According to the third embodiment, the end portion of the coil spring 34 is not supported by the bracket attached to the inner member 14 likewise the first embodiment, so that the height of the suspension device becomes not large. As a result, the ride quality of the vehicle cane be improved by making the length of the coil spring 34 long. On the other hand, since the height of the suspension device can be shrunk so as to lower the food height of the vehicle, and hence the degree of freedom in the vehicle design is increased.

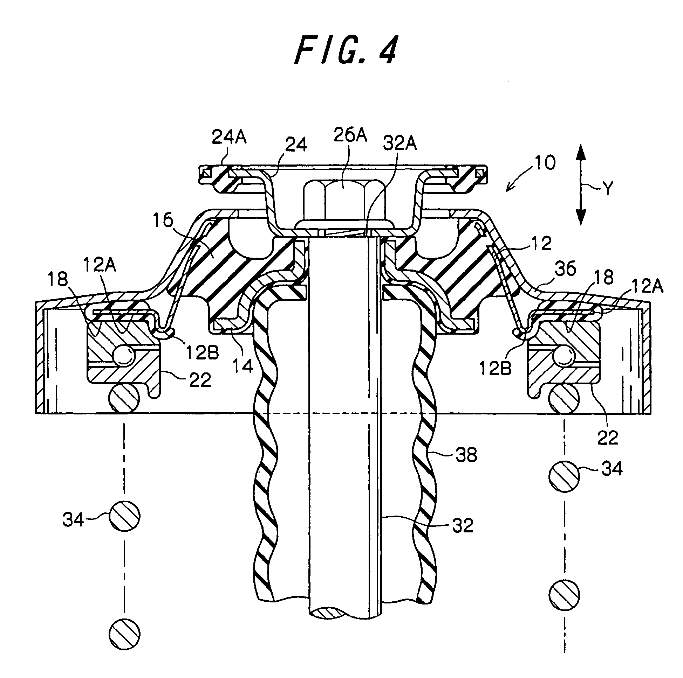

Next, FIG. 4 shows a strut mount according to the forth embodiment of the present invention in which the same member as illustrated in the first and second embodiments is denoted by the same numeral, and the redundant explanation will be omitted.

In the strut mount 10 of the fourth embodiment, the elastomer 16 and the elastic receiving portion 18 are separate members likewise the second embodiment.

In the fourth embodiment, as shown in FIG. 4,a bump rubber 38 made of urethane or the like is disposed instead of the nut 26B and the bearing 28 likewise the third embodiment.

Therefore, the fourth embodiment develops the actions similar to those of the first and second embodiments. In addition, when the strut mount 10 of the fourth embodiment is used as a suspension of the front side, it works likewise the third embodiment.

In the above-mentioned embodiments, the end portion of the coil spring 34 is made into contact with the spring receiving portion 12A through the bearing 22. However, without using the bearing 22, the end portion of the coil spring 34 may be directly made into contact with the elastic receiving portion 18 disposed on the spring receiving portion 12A.

Although the above-mentioned embodiments aim to prevent the occurrence of vibrations in the vehicle body, it goes without saying that the strut mount of the present invention may be used for applications other than the vehicle. On the other hand, the shape, size and the like of the outer member 12, the inner member 14, the elastomer 16 and the like are not limited to the embodiments.

## Claims

1. A strut mount disposed between a body panel and a strut rod, which comprises an outer member connected to the body panel, an inner member connected to the strut rod and located inside the outer member, an elastically deformable elastomer disposed so as to connect the outer member and the inner member, and a spring bearing portion formed by extending a part of the outer member outward in a flange form so as to support an end portion of a spring disposed along with the strut rod.

2. A strut mount according to claim 1, wherein an elastic receiving portion is disposed at a position of the spring receiving portion opposing to the end portion of the spring.

3. A strut mount according to claim 2, wherein the elastomer and the elastic receiving portion are integrally formed with the same rubber material.

4. A strut mount according to claim 2, wherein the elastomer and the elastic receiving portion are independently formed with separate rubber materials.

5. A strut mount according to claim 1, wherein a locking part for positioning the end portion of the spring is provided at a part of the outer member adjacent to the spring receiving portion.

6. A strut mount according to claim 1, wherein a bearing is disposed at a part of the spring receiving portion opposite to the end portion of the spring to make the end portion of the spring into contact with the spring receiving portion through the bearing.
